# EUROPEAN PATENT SPECIFICATION

(11) **EP 1 523 021 B1**
(45) Date of publication and mention of the grant of the patent: **21.11.2007**
(21) Application number: 03022864.7
(22) Date of filing: 08.10.2003
(51) Int. Cl.: H01H 13/70, H01H 9/18

(54) **Selective keyboard illumination**
Selektive Tastaturbeleuchtung
Illumination sélective d'un clavier à boutons-poussoirs

(43) Date of publication of application: 13.04.2005
(60) Divisional application: 07118148.1
(73) Proprietor: Research In Motion Limited, Waterloo, Ontario N2L 3W8 (CA)
(72) Inventor: Lazaridis, Mihal, Waterloo Ontario N2T 2K1 (CA); Lowles, Robert J., Waterloo Ontario N2T 2J5 (CA); Griffin, Jason T., Waterloo Ontario N2T 2J5 (CA)
(74) Representative: Reichl, Wolfgang

(56) References cited:
- EP-A- 0 872 996
- EP-A- 1 139 639
- WO-A-00/55879
- DE-A- 10 014 221
- US-A- 4 772 769
- US-A- 5 408 060
- US-B1- 6 281 812

## Description

### FIELD OF THE INVENTION

The present invention relates generally to the backlighting of keyboards. More particularly, the present invention relates to selectively backlighting portions of a keyboard.

### BACKGROUND OF THE INVENTION

It is common for a mobile device to receive its input through a keyboard or keypad. A typical mobile device provides either a numeric keypad based on a telephone keypad, or a keyboard based on a standardized layout such as a QWERTY keyboard. To provide a reduced form factor keyboard, or to allow a keypad layout to function as a keyboard, it is common for a number of the keys to be associated with a plurality of values. For example, the key for the letter 'W' can also function as '1' in a different mode. Other keys will have similar multiple values associated with different input modes, or may be inoperative in certain modes. To toggle between input modes, a user typically presses a shift key, a toggle key, or some combination of keys. An indication of the selected input mode is typically provided on the screen of the mobile device to indicate the active input mode to the user. However, the keyboard itself does not provide an indication of the current input mode. Such a mobile device is disclosed in US-A-5408060.

Mobile devices are also known that display keyboard and keypad representations on touch-screen liquid crystal displays. Typically, an appropriate keyboard representation is displayed in response to user selection of an input mode. For example, selecting a telephone application results in display of a telephone keypad, whereas selection of a notepad application results in display of a full keyboard for text input. Such touch-screen representations are advantageous in that only the currently active keyboard representation is displayed to the user. However, touch screens have several drawbacks including cost, thickness, fragility and lack of optical clarity.

Backlighting of both keyboards and display screens is well-known for mobile devices. Backlighting the keys of a keyboard or keypad is typically achieved by situating light emitting diodes (LEDs) or an electroluminescent panel or lamp (EL) behind the keys, or using light piping to illuminate the keys with a remote light source. Such backlighting permits a user to see the keys in low light conditions. Conventional backlighting is limited to selection of different backlighting levels, such as "high" and "low", and does not provide selective, or input mode-dependent backlighting.

It is, therefore, desirable to provide a keyboard that can clearly indicate the present mode of input and provides backlighting to allow use in low light conditions.

### SUMMARY OF THE INVENTION

In a first aspect of the present invention there is provided a mobile device having a keyboard. The mobile device comprises an input mode selector for determining an active input mode of the keyboard; and a backlight controller responsive to the active input mode provided by the input mode selector for controlling at least one light source to selectively illuminate an active portion of the keyboard.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is an illustration of a known mobile device;
Figure 2 is an illustration of a mobile device embodying selective keyboard illumination according to an aspect of the present invention in a numeric mode;
Figure 3 is an illustration of a mobile device in a numeric mode with differentiated illumination levels, according to another aspect of the present invention;
Figure 4 is an illustration of the mobile device of Figure 3 in a full keyboard mode at an intermediate illumination level, in accordance with a further aspect of the invention;
Figure 5 is an illustration of a mobile device in an alphabetic mode with partial key illumination according to another aspect of the invention;
Figure 6 is an illustration of the mobile device of Figure 5 in a non-alphabetic mode;
Figure 7 is an illustration of a mobile device enabled for selective keyboard illumination according to a still further aspect of the invention in an alphabetic mode;
Figure 8 is an illustration of the mobile device of Figure 7 in a non-alphabetic mode;
Figure 9 is an illustration of a known mobile device with a keypad;
Figure 10 is an illustration of a mobile device having selective keyboard illumination in a directional mode;
Figure 11 is an illustration of a mobile device in an alphabetic mode with partial key illumination according to another aspect of the invention;
Figure 12 is an illustration of the mobile device of Figure 11 in a numeric mode;
Figure 13 is a block diagram of a mobile device incorporating a selective keyboard illumination system; and
Figure 14 is a flow diagram of a mobile device illustrating a process for selective keyboard illumination.

### DETAILED DESCRIPTION

Generally, a method and system for illuminating a keyboard using selective backlighting, or illumination, to indicate the input mode of the keyboard is provided. Selective backlighting allows different input modes to be presented to the user by illuminating portions of the keyboard or portion of keys corresponding to selected indicia. Active portions can be highlighted, through selective illumination, in a number of ways, including illumination at different intensity levels, or with different colors. In some embodiments, selective illumination according to the present invention involves illuminating a portion of the keyboard that is active, while leaving inactive keys unilluminated. For example, in a telephone dialling application only the keys corresponding to the keys of a numeric keypad are both active and illuminated. The active keys need not form a contiguous region. For example, in certain embodiments, such as a game play or directional input mode, non-contiguous keys used to move a cursor or icon are illuminated. In other embodiments of the present invention, selective illumination takes the form of differential illumination levels for different portions of the keyboard. This allows the user of the mobile device to view the full keyboard in low light situations, but still differentiate active and inactive portions. A further embodiment provides selective illumination for each input mode using a different illumination color. This permits a user to readily recognize the current input mode. In another embodiment, selective illumination is used to illuminate particular indicia on each key or on selected keys. This further refinement permits the current mode of a key having multiple key assignments to be clearly indicated to the user. Examples of these embodiments are described with reference to the figures below.

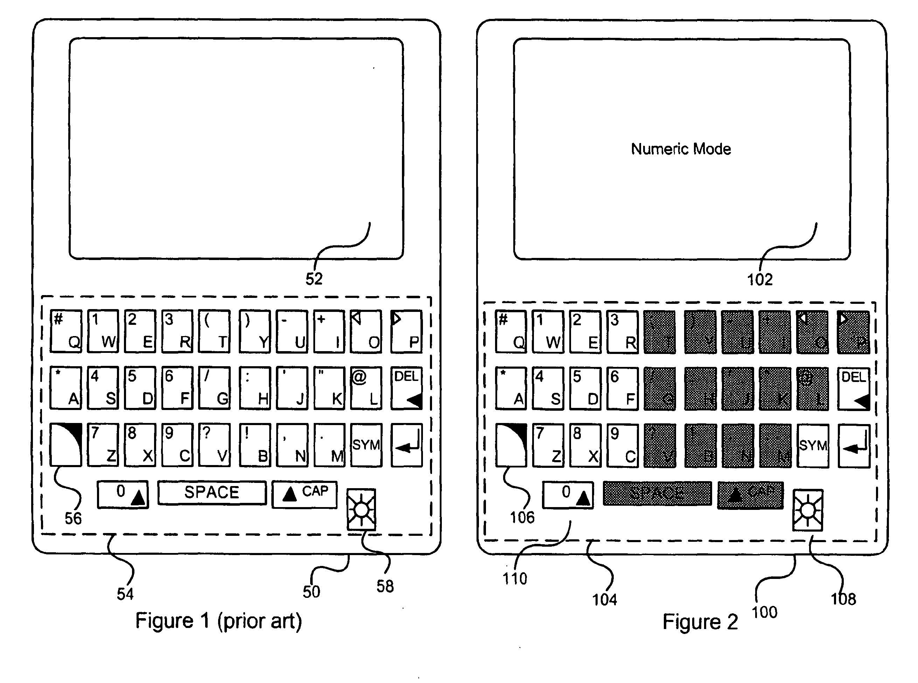

While known implementations of keyboards for mobile devices utilize both multi-mode input keyboards and backlit keyboards, they rely upon an on-screen indicator, or context, to indicate which of the multiple input modes is active. Figure 1 illustrates such a mobile device. Mobile device **50** has a display **52** and a keyboard **54**. Keyboard **54** has a backlight key **58** for activating the keyboard backlighting, and a toggle key **56** used to switch between an alphanumeric, or standard QWERTY keyboard, and a non-alphabetic input mode, such as a numeric keypad. The selection of input modes can be controlled either by selection of the mode through use of the toggle key **56**, another function key, or through software. Backlight key **58** activates a backlight mode in which both display **52** and keyboard **54** are illuminated. Backlighting of keyboard **54** is typically implemented by activating a series of light sources, such as LEDs or EL sources, situated behind keyboard **54**. Alternate embodiments known in the art employ light pipes to distribute light from one or more light sources to illuminate the keyboard.

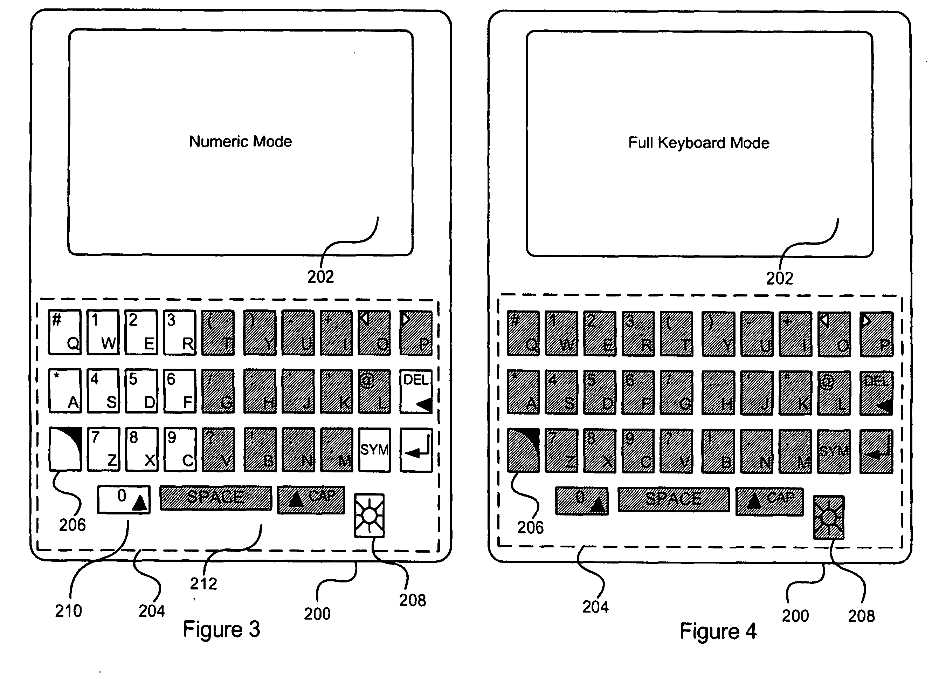

Figure 2 illustrates mobile device **100** embodying selective keyboard illumination according to an aspect of the present invention. Mobile device **100** has a display **102** and a keyboard **104** including a toggle key **106** and a backlight key **108**. When mobile device **100** executes an application such as a telephone dialer, in which only the numeric keys are active, numeric portion **110** is illuminated, while the remainder of the keyboard remains unlit. In low light conditions this causes numeric portion **110** to be visible, while in regular light conditions it preferably provides a visible distinction between the illuminated and unilluminated portions. When using another application, such as an email application, the entire keyboard **104** is illuminated. In one embodiment, the user can still use toggle key **106** to switch or cycle between the various input modes, thereby causing the mobile device to cycle through the backlighting configurations associated with each of the defined input modes. One skilled in the art will appreciate that selective illumination can be used to either replace or augment on screen indication of the active mode.

Figure 3 illustrates a keyboard using different illumination levels to indicate the active portion of the keyboard. As above, the mobile device comprises a display **202** and a keyboard **204** having a toggle key **206** and a backlight key **208**. In contrast to the embodiment of Figure 2, mobile device **200** provides multiple levels of illumination to portions of keyboard **204**. Thus in a numeric mode, the non-numeric portion **212** can be backlit to an intermediate illumination level, and numeric portion **210** can be backlit at a higher illumination level to provide the user of mobile device **200** with the ability to view all the keys in low light conditions, but still know that the numeric keypad is active. Figure 4 illustrates the keyboard of Figure 3 in a full keyboard mode, where the entire keyboard **204** is backlit at the intermediate level. Such differential illumination can also be provided as an optional mode for the embodiment described with reference to Figure 2, to provide three different illumination modes.

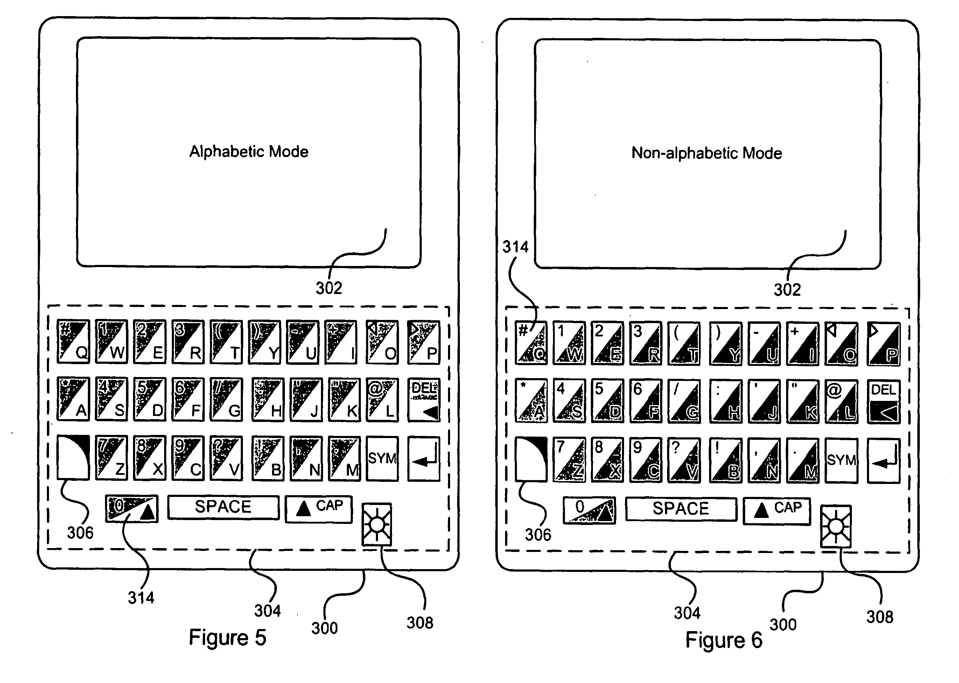

Another embodiment of the present invention is illustrated in Figures 5 and 6. Figure 5 illustrates mobile device **300** with a display **302** and a keyboard **304** having a toggle key **306** and a backlight key **308**. Keyboard **304** is in an alphabetic input mode. In this mode, selective backlighting is employed to illuminate only the alphabetic portion of keys having multiple key assignments. Thus portion 314 corresponding to the alphabetic portion of a key is illuminated while the remainder of the key is unilluminated. Figure 6 illustrates the keyboard of Figure 5 in a non-alphabetic mode where selective backlighting is employed to illuminate the non-alphabetic portion of each key, so that illuminated key section **314** corresponds to the non-alphabetic portion of a key, while the remainder of the key remains unlit.

One skilled in the art will appreciate that the selective illumination of key portions can equally be employed for illuminating key portions only in an active keyboard portion such as numeric portion **110** of Figure 2 when only a subset of keys in keyboard **304** are needed. For example, in one implementation, a telephone dialer application would preferably cause only the numeric values of keys in keyboard **304** to be illuminated. Additionally, the illuminated portion of the keys in keyboard **304** would preferably change as the user used toggle key **306** to switch between input modes. The user can preferably deactivate the backlight through use of backlight key **308**. In a refinement of this embodiment, the alphabetic and non-alphabetic values of the keys are illuminated by backlights of different colors. This allows the alphabetic and non-alphabetic input modes to be easily distinguished from each other by assigning a different color to each of the input modes, for example the alphabetic values may be illuminated by a blue light, while the non-alphabetic values are illuminated by a red light. One skilled in the art will readily appreciate that any arrangement of colors can be used, employing known color illumination methods. One such embodiment provides partial illumination of each key, with all related key sections illuminated by the same light source, and coloration provided through the use of filters in the keys. In an alternate embodiment, alphabetic key portions are illuminated by a colored light source, while the non-alphabetic key portions are illuminated by a differently colored light source. The light source in the above examples can be either local, or remote as described earlier.

It should be noted that the coloration difference does not have to be strictly related to alphabetic and non-alphabetic values, as it can be applied to different keyboard portions. For example, a numeric keypad can be illuminated using one color when a keypad mode is involved, and the full keyboard can be lit in a different color when a full keyboard mode is employed. Similarly, the multi-colored backlighting of different portions of keyboard **104** can also allow enhanced game control in a gaming mode, by providing different colored keys depending on the game function they control.

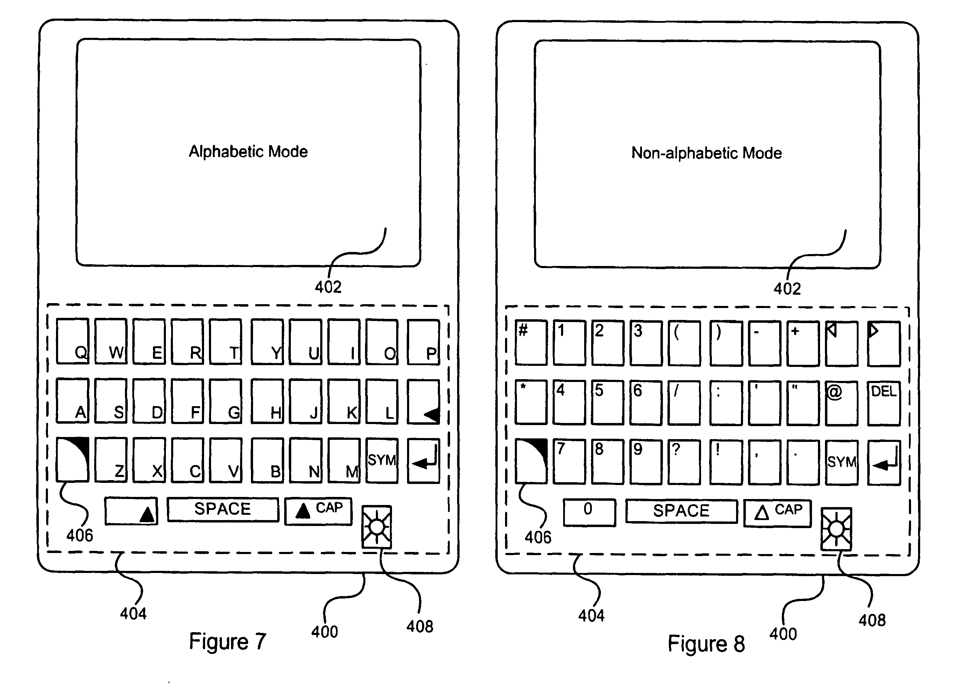

Figures 7 and 8 illustrate a further embodiment of the present invention on mobile device **400**. The mobile device **400**, like those described above, includes a display **402** and a keyboard **404** having a toggle key **406** and a backlight key **408**. Through any of a number of techniques, including light cancellation and the use of different phosphors or composites, differential illumination can be utilised to not only illuminate one of the selected input modes, but also to cause the other input values assigned to a key to fade or become substantially invisible. Thus, keyboard **404** in the embodiment of Figure 7 only shows the alphabetic values for its illuminated keys. In contrast the same keyboard **404** in Figure 8 obscures the alphabetic values of the illuminated keys and displays only the non-alphabetic values. The obscuring of key values allows a plurality of values to be assigned to a single key while minimizing the chance of user confusion as to what the active input mode is. Thus, mobile device **400** can have a plurality of key assignments invoked by different modes. For example in an unillustrated gaming mode, the keys would display only directional arrows and game controls, while these key assignments would be obscured in other modes. As noted, this embodiment can be implemented through the use of optical cancellation, or through the use of different phosphors that illuminate, and distinguish themselves from the natural color of a key, under different lighting conditions. One skilled in the art will readily appreciate that a number of other such approaches can be implemented to achieve this result. One such approach is the use of characters colored a neutral shade to match the color of the key. Under backlighting, the characters become visible. To improve optical cancellation, a light sensor can be provided in device **400** to detect the ambient light conditions. Variable strength light sources, responsive to the detected light conditions, can then be used to adjust the light levels and improve optical cancellation effects. One skilled in the art will appreciate that backlight key **406** and toggle key **408** operates as they did in previously described embodiments.

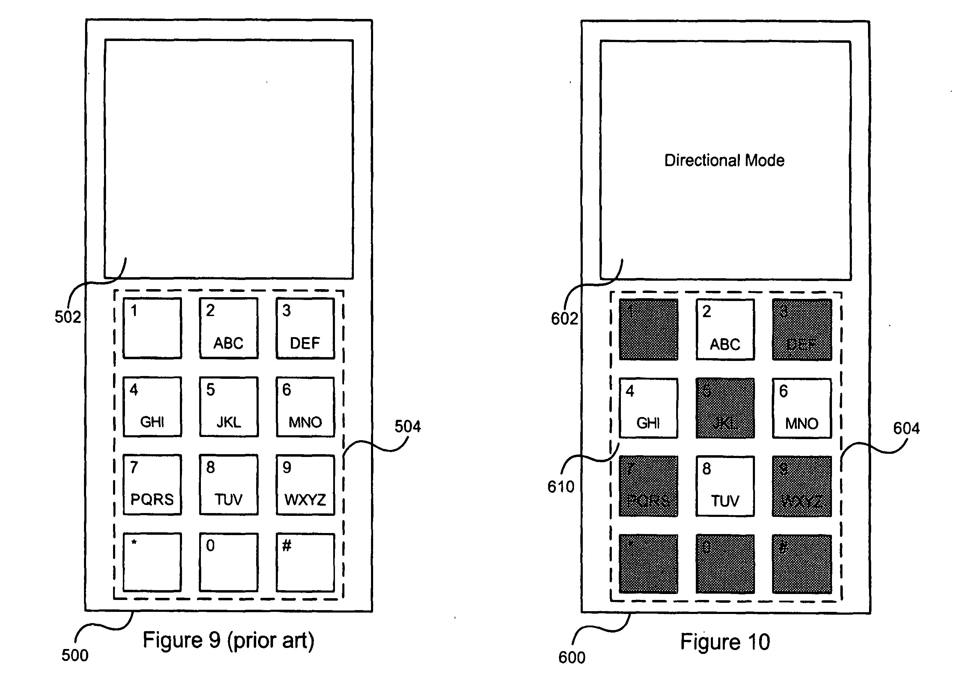

Figure 9 illustrates a known mobile device **500** having the form factor of a standard cellular phone handset. Mobile device **500** has keypad **504** in the form of a standard telephone keypad with alphabetically-ordered alphabetic key assignments and display **502**.

In accordance with an aspect of the present invention, Figure 10 illustrates a handset, as in Figure 9, in a directional mode, for use in such applications as game play modes and for navigating web pages. Mobile device **600** has keypad **604** and display **602**. In its presently illustrated state, mobile device **600** is in a directional mode and provides a directional control pad through illuminated keys **610** on keypad **604**. Such a directional mode is achieved using selective illumination techniques as described above. The embodiment of Figure 10 clearly illustrates the application of selective illumination of keys in a designated keyboard portion for illuminating active keys as designated, for example, by a software application executed on a device.

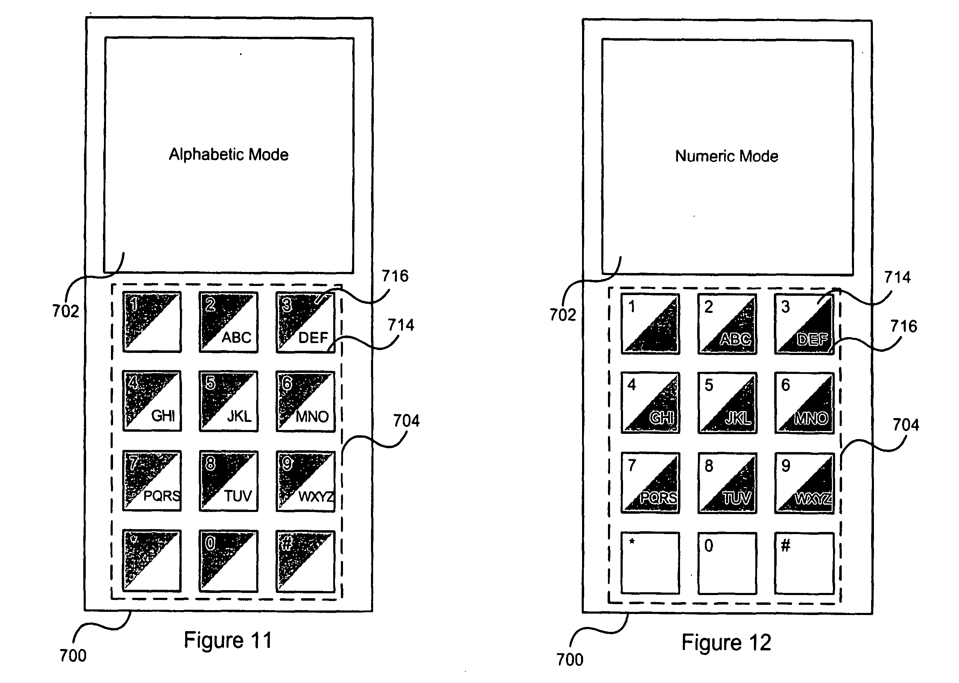

Figures 11 and 12 illustrate the illumination of key portions **714** on keypad **704** of mobile device **700** to distinguish between the active modes of keypad **704** in a manner described in relation to Figures 5 and 6. In the alphabetic mode shown in Figure 11, the illuminated key portion **714** of each key on the keypad **704** corresponds to an alphabetic portion of the key, whereas the non-illuminated portion **716** corresponds to a numeric portion of the key. In the numeric mode shown in Fig. 12, the portions **714** and **716** are reversed, such that numeric portions of keys are illuminated. One skilled in the art will readily appreciate that either a single color illumination, or multi-colored illumination of each key in keyboard **704** can be implemented using known methods, including those discussed with relation to mobile device **300** as illustrated in Figures 5 and 6. One skilled in the art will additionally appreciate that the selective illumination technique described with respect to Figures 7 and 8 can be applied to a mobile device **700** having the form factor of a cellular phone handset without difficulty, and without departing from the scope of the present invention.

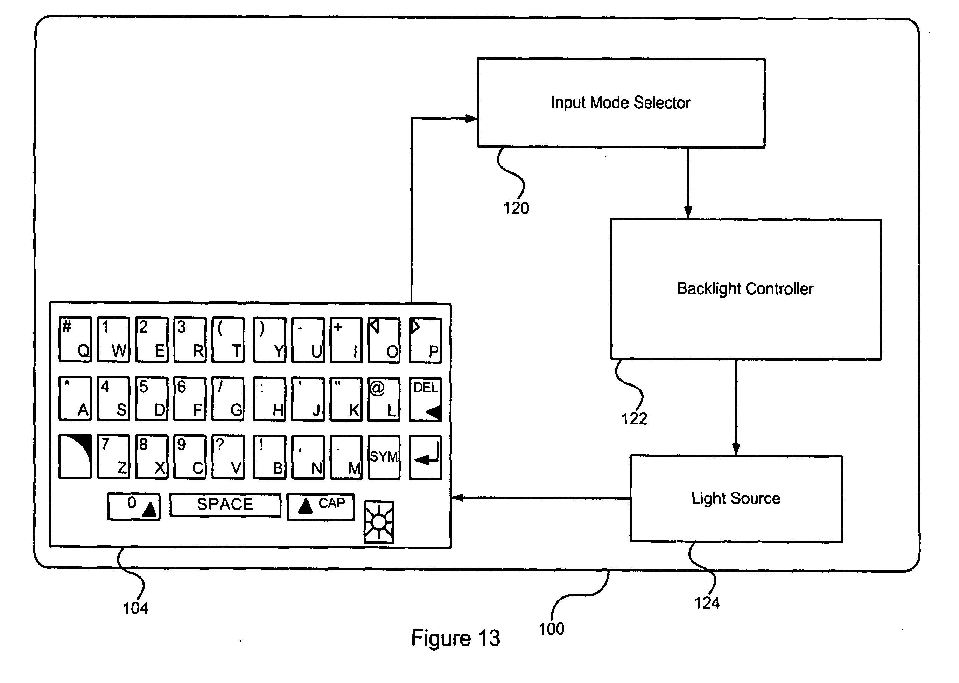

Figure 13 is a block diagram of mobile device **100** illustrating an implementation of a selective keyboard illumination system. Backlight controller **122** is used to control light sources **124** so that the active portion of keyboard **104** is illuminated. The determination of which portion of the keyboard **104** is the active portion is made by input mode selector **120**, which then provides backlight controller **122** with an indication of the active portion. The determination of the active portion is made based on any of a number of factors, including, for example, the software application executed by mobile device **100**, the user's selection of an input mode through use of toggle key **106**, and backlight key **108**. As described above, the application executed by mobile device **100** can set a preferred active mode, for example an email application may default to alphabetic mode, that the user can override through use of toggle key **106**. In addition, in some embodiments, the user can change the backlighting of the non-active portion of the keyboard **104**, as illustrated with respect to the embodiment of Figure 3, through use of the backlight key **108**. The active portion may refer to either an active portion of the keyboard or an active key portion as previously described.

Thus, in response to a number of factors, which may include the application executed by mobile device **100,** and user-defined input received through keyboard **104**, input mode selector **120** determines an active mode and provides backlight controller **122** with indication of the active mode. The communication between input mode selector **120** and backlight controller **122** can be facilitated by a number of known techniques, including the use of a direct communication line for transmitting an encoded signal indicating the selected active mode, and the use of predetermined registers to indicate one of a number of predetermined active modes.

Upon receipt of the active mode from input mode selector **120**, backlight controller **122** controls light source **124** to selectively illuminate keyboard **104**. In a first embodiment, corresponding to Figure 2, upon receiving indication that the active input mode is a numeric mode, backlight controller **122** activates a set of backlights under the portion of keyboard **104** corresponding to the numeric portion, illustrated as **110** in Figure 2. Upon receipt of an indication that the active input mode is the full keyboard mode, backlight controller **122** activates all the backlights behind keyboard **104**. In another embodiment, the backlight controller **122** controls remote light sources that provide illumination to the keys through the use of light pipes. In embodiments such as the embodiments of Figure 5 and 6, backlight controller **122** controls light source **124** to illuminate portions of keys in keyboard 104 that correspond to the active portion. One skilled in the art will appreciate that the use of different colored light sources or the illumination of different portions of keys can be achieved through the use of known techniques.

Input mode selector **120** and backlight controller **122** can be implemented either as standalone components, or as software modules executed by the processor of mobile device **200**. As standalone components, input mode selector **120** and backlight controller **122** can be implemented as software specifically designed as firmware for execution on a specified hardware platform. Alternatively, input mode selector **120** and backlight controller **122** can be designed as algorithms in an operating system executed by the processor of mobile device **100**, or they can be stored as firmware routines that can be called by the operating system executing on the processor of mobile device **100**. Those skilled in the art will appreciate that the implementation details provided above are merely exemplary, and any number of implementations can be employed where the functionality of the assigned logical blocks is spread between a number of different elements without departing from the scope of the present invention.

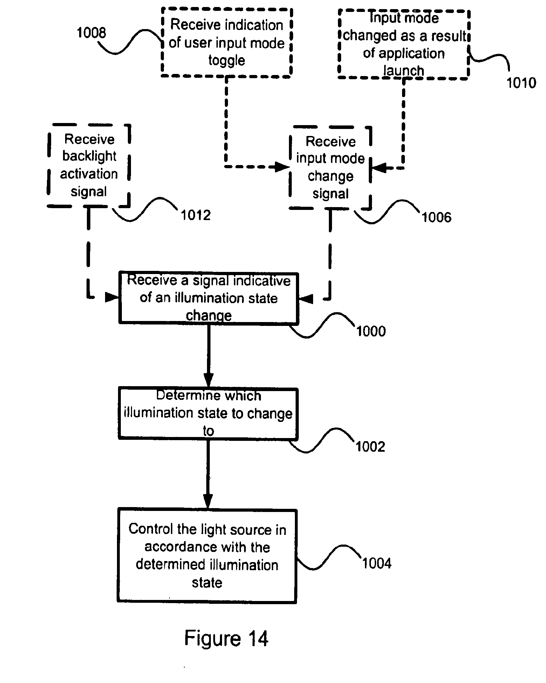

Figure 14 illustrates a method according to an embodiment of the present invention. In step **1000**, a control system, such as the system illustrated in Figure 13, receives a signal that indicates that the illumination state is to be changed. In step **1002**, a determination of which of the plurality of illumination states is to be selected is made. One skilled in the art will appreciate that different signals received can be received in step **1000**. Each of these signals is interpreted in a different manner, so that, for example, a first signal is interpreted as indicating the next state in a cycle of states is to be selected, while another signal is interpreted as indicating that a specific illumination state is to be selected. In step **1004**, the light source used to illuminate the keyboard, such as light source **124** illuminating keyboard **104**, is controlled to provide the illumination state determined in step **1002**. Thus, step **1004** allows a mobile device, such as one of the mobile devices embodying aspects of the present invention previously described, to selectively illuminate the keyboard. As described above the selective illumination can take the form of illuminating portions of the keyboard using different colours, different illumination levels or combinations of the two.

As illustrated in Figure 14, step **1000**, where a signal indicative of an illumination state change is received, can optionally include receiving a signal indicative of an input mode change **1006**. The receipt of this signal in **1006** is typically in response to the receipt of an indication that the user has toggled the input mode, as shown in step **1008**, or in response to the execution of an application that has a default data entry mode, as shown in step **1010**. The indication that the user has toggled the input mode is typically received in response to actuation of the toggle key **106**. Alternately, step **1000** can optionally include the receipt of a backlight activation signal **1012**, which is typically received in response to user actuation of the backlight key **108**. One skilled in the art will appreciate that a number of other events can result in the receipt of a signal indication of an illumination state change including timed events and detection of ambient light conditions.

## Claims

1. A mobile device (100, 200, 300, 400, 500, 600, 700) having a keyboard (104, 204, 304, 404, 504, 604, 704), the mobile device (100, 200, 300, 400, 500, 600, 700) comprising:
an input mode selector (120) for determining an active input mode of the keyboard (104, 204, 304, 404, 504, 604, 704); and
a backlight controller (122) responsive to the active input mode provided by the input mode selector (120) for controlling at least one light source (124) to selectively illuminate an active portion of the keyboard (104, 204, 304, 404, 504, 604, 704);
**characterized in that**
the mobile device (100, 200, 300, 400, 500, 600, 700) is configured for executing at least two applications; and
the input mode selector (120) is configured for determining the active input mode in response to the execution of one of the at least two applications, wherein the first and second of the at least two applications are associated with a first and a second default active input mode, respectively.

2. The mobile device (100, 200, 300, 400, 500, 600, 700) of claim 1, wherein the at least two applications include one of a telephone dialer application, an email application, a notepad application, a game application and any application specific software.

3. The mobile device (100, 200, 300, 400, 500, 600, 700) of claim 1 or 2, wherein the active mode determined by the input mode selector (120) is one of a numeric mode, an alphabetic mode, a non-alphabetic mode, a full keyboard mode, a directional mode and a gaming mode.

4. The mobile device (100, 200, 300, 400, 500, 600, 700) of any of the preceding claims, wherein the active portion of the keyboard (104, 204, 304, 404, 504, 604, 704) selectively illuminated by the at least one light source (124) is a portion of at least one key on the keyboard (104, 204, 304, 404, 504, 604, 704).

5. The mobile device (100, 200, 300, 400, 500, 600, 700) of any of the preceding claims, wherein the at least one light source (124) includes at least one light emitting diode.

6. The mobile device (100, 200, 300, 400, 500, 600, 700) of any of the preceding claims, wherein the at least one light omitting diode is connected to the keyboard (104, 204, 304, 404, 504, 604, 704) by at least one light pipe.

7. The mobile device (100, 200, 300, 400, 500, 600, 700) of any of the preceding claims, wherein the active portion is selectively illuminated using a different illumination level than a non-active portion of the keyboard (104, 204, 304, 404, 504, 604, 704).

8. The mobile device (100, 200, 300, 400, 500, 600, 700) of any of the preceding claims, wherein the active portion is selectively using optical cancellation.

9. The mobile device (100, 200, 300, 400, 500, 600, 700) of any of the preceding claims, wherein the active portion is selectively illuminated using a colored light.

10. The mobile device (100, 200, 300, 400, 500, 600, 700) of claim 9, wherein the active portion is selectively illuminated using a different color than a non-active portion of the keyboard (104, 204, 304, 404, 504, 604, 704).

11. The mobile device (100, 200, 300, 400, 500, 600, 700) of claim 1, wherein the input mode selector is configured for determining the active input mode further in response to actuation of a toggle key.

## Patentansprüche

1. Mobile Vorrichtung (100, 200, 300, 400, 500, 600, 700) mit einer Tastatur (104, 204, 304, 404, 504, 604, 704), wobei die mobile Vorrichtung (100, 200, 300, 400, 500, 600, 700) aufweist:
einen Eingabemodus-Selektor (120) zur Bestimmung eines aktiven Eingabemodus der Tastatur (104, 204, 304, 404, 504, 604, 704); und
eine Hintergrundbeleuchtungs-Steuervorrichtung (122), die auf den aktiven Eingabemodus reagiert, der durch den Eingabemodus-Selektor (120) geliefert wird, zur Steuerung zumindest einer Lichtquelle (124), um selektiv einen aktiven Teil der Tastatur (104, 204, 304, 404, 504, 604, 704) zu beleuchten;
**dadurch gekennzeichnet, dass**
die mobile Vorrichtung (100, 200, 300, 400, 500, 600, 700) zur Ausführung von zumindest zwei Anwendungen konfiguriert ist; und
der Eingabemodus-Selektor (120) zur Bestimmung des aktiven Eingabemodus als Antwort auf die Ausführung einer der zumindest zwei Anwendungen konfiguriert ist, wobei die erste und zweite der zumindest zwei Anwendungen jeweils einen ersten und zweiten standardmäßigen aktiven Eingabemodus zugeordnet haben.

2. Mobile Vorrichtung (100, 200, 300, 400, 500, 600, 700) gemäß Anspruch 1, wobei die zumindest zwei Anwendungen eine Anwendung einer Telefonwähleranwendung, einer Email-Anwendung, einer Notizblock-Anwendung, einer Spiele-Anwendung und einer Anwendungs-spezifischen Software umfassen.

3. Mobile Vorrichtung (100, 200, 300, 400, 500, 600, 700) gemäß Anspruch 1 oder 2, wobei der aktive Modus, der durch den Eingabemodus-Selektor (120) bestimmt wird, ein Modus aus einem numerischen Modus, einem alphabetischen Modus, einem nicht-alphabetischen Modus, einem Modus mit vollständiger Tastatur, einem Richtungsmodus und einem Spiele-Modus ist.

4. Mobile Vorrichtung (100, 200, 300, 400, 500, 600, 700) gemäß einem der vorhergehenden Ansprüche, wobei der aktive Teil der Tastatur (104, 204, 304, 404, 504, 604, 704), der selektiv durch die zumindest eine Lichtquelle (124) beleuchtet wird, ein Teil zumindest einer Taste auf der Tastatur (104, 204, 304, 404, 504, 604, 704) ist.

5. Mobile Vorrichtung (100, 200, 300, 400, 500, 600, 700) gemäß einem der vorhergehenden Ansprüche, wobei die zumindest eine Lichtquelle (124) zumindest eine Leuchtdiode umfasst.

6. Mobile Vorrichtung (100, 200, 300, 400, 500, 600, 700) gemäß einem der vorhergehenden Ansprüche, wobei die zumindest eine Leuchtdiode mit der Tastatur (104, 204, 304, 404, 504, 604, 704) durch zumindest einen Lichtleiter verbunden ist.

7. Mobile Vorrichtung (100, 200, 300, 400, 500, 600, 700) gemäß einem der vorhergehenden Ansprüche, wobei der aktive Teil selektiv beleuchtet wird durch Verwendung eines unterschiedlichen Beleuchtungspegels als ein nicht-aktiver Teil der Tastatur (104, 204, 304, 404, 504, 604, 704).

8. Mobile Vorrichtung (100, 200, 300, 400, 500, 600, 700) gemäß einem der vorhergehenden Ansprüche, wobei der aktive Teil selektiv eine optische Löschung verwendet.

9. Mobile Vorrichtung (100, 200, 300, 400, 500, 600, 700) gemäß einem der vorhergehenden Ansprüche, wobei der aktive Teil unter Verwendung eines Farblichts selektiv beleuchtet wird.

10. Mobile Vorrichtung (100, 200, 300, 400, 500, 600, 700) gemäß Anspruch 9, wobei der aktive Teil selektiv beleuchtet wird unter Verwendung einer anderen Farbe als ein nicht-aktiver Teil der Tastatur (104, 204, 304, 404, 504, 604, 704).

11. Mobile Vorrichtung (100, 200, 300, 400, 500, 600, 700) gemäß Anspruch 1, wobei der Eingabemodus-Selektor zur Bestimmung des aktiven Eingabemodus weiter als Antwort auf eine Bestätigung einer Umschalttaste konfiguriert ist.

## Revendications

1. Dispositif mobile (100, 200, 300, 400, 500, 600, 700) ayant un clavier (104, 204, 304, 404, 504, 604, 704), le dispositif mobile (100, 200, 300, 400, 500, 600, 700) comprenant :
un sélecteur (120) de mode d'entrée pour déterminer un mode d'entrée actif du clavier (104, 204, 304, 404, 504, 604, 704) ; et
une commande (122) de rétro-éclairage sensible au mode d'entrée actif fourni par le sélecteur (120) de mode d'entrée pour commander au moins une source (124) de lumière pour éclairer sélectivement une partie active du clavier (104, 204, 304, 404,504,604,704);
**caractérisé en ce que**
le dispositif mobile (100, 200, 300, 400, 500, 600, 700) est configuré pour exécuter au moins deux applications ; et
le sélecteur (120) de mode d'entrée est configuré pour déterminer le mode d'entrée actif en réponse à l'exécution d'une parmi les au moins deux applications, dans lequel la première et la deuxième parmi les au moins deux applications sont associées à un premier et à un deuxième mode d'entrée actif par défaut, respectivement.

2. Dispositif mobile (100, 200, 300, 400, 500, 600, 700) selon la revendication 1, dans lequel les au moins deux applications comprennent une parmi une application de numéro de téléphone, une application de courrier électronique, une application de bloc-notes, une application de jeu et tout logiciel propre à une application.

3. Dispositif mobile (100, 200, 300, 400, 500, 600, 700) selon la revendication 1 ou 2, dans lequel le mode actif déterminé par le sélecteur (120) de mode d'entrée est un parmi un mode numérique, un mode alphabétique, un mode non-alphabétique, un mode à clavier complet, un mode directionnel et un mode jeu.

4. Dispositif mobile (100, 200, 300, 400, 500, 600, 700) selon l'une quelconque des revendications précédentes, dans lequel la partie active du clavier (104, 204, 304, 404, 504, 604, 704) éclairée sélectivement par l'au moins une source (124) de lumière est une partie d'au moins une touche sur le clavier (104, 204, 304, 404, 504, 604, 704).

5. Dispositif mobile (100, 200, 300, 400, 500, 600, 700) selon l'une quelconque des revendications précédentes, dans lequel l'au moins une source (124) de lumière comprend au moins une diode électroluminescente.

6. Dispositif mobile (100, 200, 300, 400, 500, 600, 700) selon l'une quelconque des revendications précédentes, dans lequel l'au moins une diode électroluminescente est reliée au clavier (104, 204, 304, 404, 504, 604, 704) par au moins un conducteur de lumière.

7. Dispositif mobile (100, 200, 300, 400, 500, 600, 700) selon l'une quelconque des revendications précédentes, dans lequel la partie active est éclairée sélectivement en utilisant un niveau d'éclairage différent de celui d'une partie non-active du clavier (104, 204, 304, 404, 504, 604, 704).

8. Dispositif mobile (100, 200, 300, 400, 500, 600, 700) selon l'une quelconque des revendications précédentes, dans lequel la partie active utilise sélectivement une annulation optique.

9. Dispositif mobile (100, 200, 300, 400, 500, 600, 700) selon l'une quelconque des revendications précédentes, dans lequel la partie active est sélectivement éclairée en utilisant une lumière colorée.

10. Dispositif mobile (100, 200, 300, 400, 500, 600, 700) selon la revendication 9, dans lequel la partie active est sélectivement éclairée en utilisant une couleur différente de celle d'une partie non-active du clavier (104, 204, 304, 404, 504, 604, 704).

11. Dispositif mobile (100, 200, 300, 400, 500, 600, 700) selon la revendication 1, dans lequel le sélecteur de mode d'entrée est configuré pour déterminer le mode d'entrée actif également en réponse à l'activation d'une touche à bascule.
